(19) **Europäisches Patentamt**

**European Patent Office**

**Office européen des brevets**

(11) **EP 1 733 870 A1**

(12) **EUROPEAN PATENT APPLICATION**
published in accordance with Art. 158(3) EPC

(43) Date of publication:
**20.12.2006 Bulletin 2006/51**

(21) Application number: **04726006.2**

(22) Date of filing: **06.04.2004**

(51) Int Cl.:
***B32B 9/00*** *(2006.01)*　　　***G02B 1/11*** *(2006.01)*

(86) International application number:
**PCT/JP2004/004939**

(87) International publication number:
**WO 2005/100013 (27.10.2005 Gazette 2005/43)**

(84) Designated Contracting States:
**DE FR GB**

(71) Applicant: **Teijin Dupont Films Japan Limited
Tokyo 100-0011 (JP)**

(72) Inventor: **OGURI, Isamu,
Teijin DuPont Films Japan Limited
Gifu 5030123 (JP)**

(74) Representative: **Cockerton, Bruce Roger et al
Carpmaels & Ransford,
43-45 Bloomsbury Square
London WC1A 2RA (GB)**

(54) **ANTIREFLECTIVE FILM**

(57)　An antireflection film contains a transparent substrate having formed thereon an antireflection layer, the antireflection layer contains a first layer formed on the transparent substrate, a second layer formed on the first layer, and a third layer formed on the second layer, and the first layer and the second layer contain an oxide of at least one metal selected from the group consisting of titanium and zirconium and satisfying the specific expression, whereby such an antireflection film is provided that has excellent adhesiveness between the layers, excellent physical and chemical durability, and favorable antireflection capability.

EP 1 733 870 A1

Printed by Jouve, 75001 PARIS (FR)

**Description**

TECHNICAL FIELD

The present invention relates to an antireflection film.

BACKGROUND ART

Upon viewing a displayed article through a showcase or viewing a landscape through a window, they are significantly difficult to see in some cases due to external light reflected by the surface of the showcase or the window. Accordingly, it has been practiced that an antireflection film is adhered to a transparent substrate constituting the showcase or the window.

As the antireflection film, such an antireflection film has been used that contains a transparent plastic film having formed thereon a single layer low refractive index layer formed of an inorganic compound or an organic fluorine compound, and such an antireflection film is also used that contains a transparent plastic film having formed thereon an antireflection layer containing two or more layers including a low refractive index layer and a high refractive index layer.

The antireflection layer is generally constituted by an inorganic compound, such as a metallic oxide. The antireflection layer is formed by using a wet coating method or a vacuum processing method. It is preferably formed by the wet coating method since the use of the vacuum processing method is costly. However, since insufficient antireflection capability is obtained by the wet coating method, a method of forming an antireflection layer by combining a wet coating method and a vapor phase method is proposed as a method for obtaining sufficient antireflection capability (JP-A-10-728). However, it has been difficult to obtain sufficient adhesion between a layer formed by the wet coating method and a layer formed by the vapor phase method, and thus only insufficient durability is obtained. In order to improve the adhesiveness, a method of constituting an antireflection layer with a combination of specific substances (JP-A-2003-005069), but only insufficient adhesiveness has not yet been obtained.

DISCLOSURE OF THE INVENTION

An object of the invention is to solve the problems and to provide such an antireflection film containing an intermediate refractive index layer formed by a wet coating method and a high refractive index layer thereof formed by a vapor phase method, that has excellent adhesiveness between the layers, excellent physical and chemical durability, and favorable antireflection capability.

The invention relates to an antireflection film containing a transparent substrate having formed thereon an antireflection layer, the antireflection layer containing a first layer formed on the transparent substrate, a second layer formed on the first layer, and a third layer formed on the second layer, the first layer and the second layer containing an oxide of at least one metal selected from the group consisting of titanium and zirconium and satisfying the following expression:

$$P1 > P2$$

wherein P1 = O1/M1, P2 = O2/M2, O1 represents a number of oxygen element constituting the first layer, M1 represents a number of a metallic element constituting the first layer, O2 represents a number of oxygen element constituting the second layer, and M2 represents a number of a metallic element constituting the second layer.

The invention will be described in detail below. (Transparent Substrate)

The transparent substrate is a substrate having transparency retaining the antireflection film. The transparent substrate is preferably an organic polymer film owing to the excellent industrial productivity thereof.

Examples of the organic polymer include polyester (such as polyethylene terephthalate and polyethylene naphthalate), poly(meth)acrylate (such as polymethyl methacrylate), polycarbonate, polystyrene, polyvinyl alcohol, polyvinyl chloride, polyvinylidene chloride, polyethylene, an ethylene-vinyl acetate copolymer, polyurethane, triacetylcellulose and cellophane. Among these, polyethylene terephthalate, polycarbonate, polymethyl methacrylate and triacetylcellulose are preferred from the standpoint of transparency and strength.

The organic polymer film may be either a non-stretched film or a stretched film. For example, a polyester film is generally used as a biaxially stretched film, and a polycarbonate film, a triacetate film and a cellophane film are generally used as a non-stretched film. The transparent substrate may be provided with an adhesiveness imparting layer.

The transparent substrate preferably has a thickness of from 5 to 1,000 $\mu$m, and the thickness may be appropriately determined depending on purpose of the antireflection film.

(Hardcoat Layer)

The transparent substrate is preferably provided with a hardcoat layer for imparting a desired hardness to the antireflection film. The hardcoat layer is preferably transparent and has an appropriate hardness. The hardcoat layer may be formed, for example, with an ionization radiation curable resin, an ultraviolet ray curable resin or a thermosetting resin. In particular, an acrylic resin and an organic silicon resin of an ultraviolet ray curing type, and a thermosetting polysiloxane resin are preferred. Known materials may be used as the resins.

The hardcoat layer is preferably formed by a method providing a smooth and uniform surface.

The hardcoat layer preferably contains transparent inorganic fine particles and/or organic fine particles having an average particle diameter of from 0.01 to 3 $\mu$m. The particles are preferably contained in a mixed and dispersed form. According to the constitution, light scattering property, which is referred to as antiglare property, can be obtained. The antireflection layer is formed on the hardcoat layer imparted with the light scattering property, whereby blur of an image is reduced to obtain a clear image as compared to the case where a simple light scattering treatment is made.

(Antireflection Layer)

The first layer and the second layer of the antireflection layer contain an oxide of at least one metal selected from the group consisting of titanium and zirconium from the standpoint of obtaining favorable refractive index and good transparency and adhesiveness.

The antireflection layer in the invention satisfies the following relational expression. Excellent antireflection capability can be obtained by satisfying the condition.

$$P1 > P2$$

wherein P1 = O1/M1, P2 = O2/M2, O1 represents a number of oxygen element constituting the first layer, M1 represents a number of a metallic element constituting the first layer, O2 represents a number of oxygen element constituting the second layer, and M2 represents a number of a metallic element constituting the second layer.

In order to satisfy the element ratio, the first layer of the antireflection layer is preferably a layer of a substance derived from an alkoxide of titanium and/or zirconium.

The layer of a substance derived from an alkoxide of titanium and/or zirconium is preferably formed in such a manner that an alkoxide of titanium and/or zirconium is diluted with a solvent, and the solution is hydrolyzed during the coating and drying steps. In this case, the coated layer may be subjected to a heat treatment after coating. The heat treatment may be carried out at a temperature equal to or less than the thermal deformation temperature of the transparent substrate. For example, in the case where the transparent substrate is a polyethylene terephthalate film, the heat treatment may be carried out at a temperature of about from 80 to 150°C for a period of about from 30 seconds to 5 minutes. A coating layer of silicon oxide is formed through the heat treatment. The conditions for the heat treatment may be appropriately determined since they vary depending on the kind and thickness of the transparent substrate.

Specific examples of the alkoxide of titanium and/or zirconium used herein include a compound represented by the following formula. The compound may be used as a monomer, and a dimer to hexamer thereof may be used.

$$M(OR)_4$$

wherein M represents Ti or Zr, and R represents an alkyl group having from 1 to 10 carbon atoms.

Fine particles of a metallic oxide may be added to the first layer and/or the second layer of the antireflection layer, and an organic silicon compound may be added thereto for adjusting the refractive index.

The second layer of the antireflection layer preferably satisfies the following expression from the standpoint of obtaining good adhesiveness and transparency.

$$1.65 \leq P2 \leq 1.95$$

The second layer more preferably satisfies the following expression.

$$1.75 \leq P2 \leq 1.90$$

In the case where P2 exceeds the upper limit of the range, an antireflection film having a low strength is obtained, and in the case where it is less than the lower limit, only low adhesiveness with the first layer is obtained to cause absorption of light, which brings about poor transparency.

The second layer is preferably formed by a sputtering method, which is a representative example of a physical vapor phase method. In the case where the second layer is formed by a coating method, it is difficult to control P2 within the aforementioned range. In a sputtering method, P2 of the second layer to be formed can be easily controlled by changing the composition of a rare gas and a reactive gas introduced upon forming a thin film.

In the case where the second layer is formed by a sputtering method, atoms of a target used for sputtering collide with the transparent substrate along with high energy to provide an anchoring effect, whereby the second layer is firmly adhered to the transparent substrate irrespective to the wettability of the transparent substrate.

Furthermore, sputtering on a large area can be relatively easily carried out by increasing the size of the target.

Upon forming the second layer by a sputtering method, a method for forming a thin film layer (second layer) of titanium oxide or zirconium oxide by using an oxide as a target, and a method for forming a thin film layer (second layer) of titanium oxide or zirconium oxide by using a metal as a target and introducing a rare gas and an oxidizing gas (such as oxygen and ozone) during formation of the film (reactive sputtering method) may be used.

In the former method is employed, it is difficult to control P2 of the second layer. In the case where the later method (reactive sputtering method) is employed, P2 can be controlled by changing the composition of a rare gas and an oxidizing gas. In this method, furthermore, the second layer can be formed at an intermediate rate between the oxide mode with a low film forming rate and the metal mode with a high film forming rate, which provide such an advantage that the film formation can be rapidly carried out as compared to the former method. Accordingly, the second layer is preferably formed by the later method (reactive sputtering method).

The sputtering method of the second layer will be described in more detail below.

The sputtering method is preferably carried out with an apparatus having a measuring means of a plasma emission intensity and a controlling means of a flow rate of a reactive gas combined with each other. The measuring means of a plasma emission intensity is preferably a monitoring device that is disposed at a position where a plasma emission region can be monitored, and is capable of measuring an excitation emission intensity (plasma emission intensity) of a metal in the plasma. The controlling means of a flow rate of a reactive gas is preferably a device that compares the plasma emission intensity measured by the monitoring device with a set value, and controlling the oxidizing gas flow rates in respective chambers by automatically controlling a gas flow rate control valve to make the measured value equal to the set value (hereinafter, referred to as PEM).

As the apparatus having a measuring means of a plasma emission intensity and a controlling means of a flow rate of a reactive gas combined with each other, a commercially available apparatus, "PEM05", produced by Ardenne AG, may be used.

In this case, the measured value of a plasma emission intensity upon discharging by using a target of metallic titanium or metallic zirconium only with argon gas (i.e., upon forming a thin film of metallic titanium or metallic zirconium) is assumed to be 90, and the set value of a plasma emission intensity may be set smaller than the measured value. When the set value of a plasma emission intensity is decreased, the opening ratio of the oxygen gas introducing valve is increased to increase the oxidation degree (P2), and when the set value is increased, the opening ratio of the oxygen gas introducing valve is decreased to decrease the oxidation degree (P2). Accordingly, P2 can be controlled by employing the reactive sputtering method and adjusting the plasma emission intensity.

In order to make P2 within the range of the invention, the plasma emission intensity is preferably from 20 to 30, and more preferably from 22 to 28.

In the reactive sputtering method, for example, a direct current magnetron system, a high frequency magnetron system, a dual cathode magnetron system and an electron cyclotron resonance system may be used. These systems have been known in the art.

The third layer is preferably a film of an oxide of silicon from the standpoint of obtaining good strength, refractive index and transparency. The third layer may be formed by either a wet method or a gas phase method, and is preferably formed by a wet method since the layer can be formed at low cost with high transparency. In the case where the second layer is formed by a wet method, it is preferably formed by using an alkoxide of silicon. In this case, an antireflection layer having a high strength can be obtained.

Examples of an alkoxide of silicon used herein include tetraethyl silicate, tetramethyl silicate, tetraisopropoxy silicate and tetrabutoxy silicate. These may be a monomer, and a polymer thereof may be used.

The third layer may contain an organic silicon compound represented by the following general formula appropriately corresponding to the desired hardness, flexibility and surface property of the film.

$$R^1{}_aR^2{}_bSiX_{4-(a+b)}$$

wherein $R^1$ and $R^2$ each represents an alkyl group, an alkenyl group, an allyl group, a halogen group, an epoxy group, an amino group, a mercapto group, a methacrylic group or a hydrocarbon group having a fluoro group or a cyano group, X represents an alkoxy group having from 1 to 8 carbon atoms, a and b each is 0, 1 or 2, and a+b is a number of 2 or less.

The method for forming the film of silicon oxide as the third layer from the silicon alkoxide is preferably a method of coating a sol obtained by hydrolyzing the silicon alkoxide on the second layer, and then drying and curing the same.

The method for preparing the sol is preferably a method of dissolving the silicon compound in an organic solvent, and then hydrolyzing the same. Examples of the organic solvent used herein include an alcohol, such as isopropyl alcohol, methanol and ethanol; a ketone, such as methyl ethyl ketone and methyl isobutyl ketone; an ester, such as ethyl acetate and butyl acetate; an aromatic hydrocarbon, such as toluene and xylene; and a halogenated hydrocarbon. These solvents may be used solely or as a mixture.

The silicon alkoxide is preferably dissolved in the solvent in a concentration of 0.1% by weight or more, and more preferably from 0.1 to 10% by weight, in terms of silicon oxide generated in a solvent upon completely hydrolyzing and condensing the silicon alkoxide. In the case where the concentration is less than 0.1% by weight, the sol film thus formed fails to exhibit desired characteristics sufficiently, and in the case where it exceeds 10% by weight, it is not preferred since formation of a transparent and uniform film becomes difficult.

The resulting solution is added with water in such an amount that is necessary for hydrolysis, and hydrolysis is then preferably carried out at a temperature of from 15 to 35°C, and more preferably from 22 to 28°C, under stirring for a period of from 0.5 to 48 hours, and more preferably from 2 to 35 hours.

A catalyst is preferably used in the hydrolysis. The catalyst is preferably an acid, such as hydrochloric acid, nitric acid, sulfuric acid and acetic acid. The acid as the catalyst is preferably added as an aqueous solution of from 0.0001 to 12N, and more preferably from 0.0005 to 5 N. The water contained in the aqueous solution may be used for hydrolysis, and the pH of the total solution is preferably adjusted to a range of from 4 to 10. As the catalyst, a base, such as ammonia, may also be used.

The coating method of the resulting sol may be a method used in an ordinary coating operation, and examples the method used herein include a spin coating method, a dip coating method, a spray coating method, a roll coater method, a meniscus coater method, a flexographic printing method, a screen printing method, a bead coater method and a microgravure coater method.

After coating the sol, the coated layer is subjected to a heat treatment. The heat treatment is carried out at a temperature equal to or less than the thermal deformation temperature of the transparent substrate. For example, in the case where the transparent substrate is a polyethylene terephthalate film, the heat treatment may be carried out at a temperature of about from 80 to 150°C for a period of about from 30 seconds to 5 minutes, so as to form a gel film of silicon oxide. The conditions for the heat treatment may be appropriately determined since they vary depending on the kind and thickness of the transparent substrate.

(Antifouling Layer)

An antifouling layer may be formed on the antireflection layer for protecting the surface of the antireflection layer and further improving the antifouling property. Examples of a material for forming the antifouling layer include a compound having a hydrophobic group. Specific examples thereof include fluorocarbon, perfluorosilane and polymer compounds thereof. A polymer compound having oil repelling property is preferably used for improving antifouling property upon wiping off fingerprints.

The antifouling layer may be formed by using a vacuum film forming process, such as a vacuum deposition method, a sputtering method, an ion plating method, a plasma CVD method and a plasma polymerization method, corresponding to the material for forming the same, and may also be formed by using a coating method of a wet process, such as microgravure, screen and dip.

In the case where the antifouling layer is provided, the antifouling layer is preferably formed to have a thickness of from 1 to 50 nm for preventing the function of the antireflection layer from being impaired. The antifouling layer having a thickness larger than the range adversely affects the function of the antireflection film, and that having a thickness smaller than the range is not preferred since the antifouling function might not be exhibited.

ADVANTAGES OF THE INVENTION

According to the invention, such an antireflection film containing an intermediate refractive index layer formed by a wet coating method and a high refractive index layer thereof formed by a vapor phase method, that has excellent adhesiveness between the layers, excellent physical and chemical durability, and favorable antireflection capability.

EXAMPLES

The invention will be described in more detail below with reference to examples.
The film characteristics were evaluated in the following manner. All the "parts" are parts by weight.

(1) Adhesiveness

To an antireflection film having been allowed to stand at 60°C for 500 hours, six cut lines were formed crisscross each at a spacing of 2 mm with a cutter knife to form 25 grids. A cellophane adhesive tape of Nichiban Co., Ltd. was adhered onto the grids and then peeled at a peeling angle of 90°, and the number of grids of the antireflection layer remaining on the antireflection film was counted visually, which was evaluated in the following standard.

　　A: 25 grids remaining (no peeling)
　　B: 20 to 24 grids
　　C: 19 or fewer grids

(2) Element Ratio of M and O

The ratio of M and O was measured by using an X-ray photoelectron spectrometer, PHI Quantum 2000 (produced by ULVAC-PHI, Inc.), while sputter-etching the surface.
Etching condition: $Ar^+$, E = 0.5 keV, 2 mm square raster, sputtering rate: 1.5 m/min (in terms of $SiO_2$)

(3) Cracks

An antireflection film was wound on a bar having a diameter of 8 mm with an antireflection layer outside, and after maintaining for 10 seconds, the antireflection layer was observed to confirm presence of cracks visually.

　　A: no crack
　　C: cracks observed

Coating Composition 1

37.6 parts of ethanol was added to 25 parts of ethyl silicate, to which 17.5 parts of purified water and 6 parts of 0.001 N HCl were added, followed by hydrolyzing at 23°C for 24 hours, to provide a coating composition.

Example 1

On one surface of a biaxially stretched polyethylene terephthalate film having been subjected to an adhesion facilitating treatment (OPFW 188 μm, produced by Teijin, Ltd.) as a transparent substrate, an UV curing hardcoat agent (DeSolite Z7501, produced by JSR Corp.) was coated with a bar coater, followed by drying and UV curing, to provide a hardcoat layer, and then a ligroin/n-butanol (3/1) solution of a tetramer of tetrabutyl titanate (TBT B-4, a brand name, produced by Nippon Soda Co., Ltd.) was coated on the hardcoat layer, followed by drying at 150°C for 1 minute, to provide the first layer having a thickness of about 110 nm of the antireflection layer.
The resulting film was set in a sputtering apparatus having PEM installed therein, which was then depressurized to $3 \times 10^{-3}$ Pa. Ar gas was then introduced thereto to a gas pressure of 0.5 Pa, and sputtering was carried out by applying electric power of 1 kW using Ti as a target, at which the plasma emission intensity of Ti was measured and set to 90. Thereafter, while setting the plasma emission intensity and introducing $O_2$ gas, the shutter was opened at the plasma intensity of Ti maintained at 25, to initiate formation of a film, whereby the second layer of the antireflection layer was formed to have a thickness of 25 nm. Furthermore, the coating composition 1 was coated with a bar coater, followed by drying at 150°C for 1 minute, to form the third layer having a thickness of 100 nm of the antireflection film, and thus the antireflection film was completed.

Example 2

The same procedures as in Example 1 were carried out except that the plasma emission intensity upon forming the second layer of the antireflection layer was 27.

Example 3

The same procedures as in Example 1 were carried out except that the plasma emission intensity upon forming the second layer of the antireflection layer was 30.

Example 4

The same procedures as in Example 1 were carried out except that the target upon forming the second layer of the antireflection layer was Zr.

Example 5

The same procedures as in Example 1 were carried out except that the plasma emission intensity upon forming the second layer of the antireflection layer was 20.

Comparative Example 1

The same procedures as in Example 1 were carried out except that the plasma emission intensity upon forming the second layer of the antireflection layer was 35.

Comparative Example 2

The same procedures as in Example 1 were carried out except that the sputtering for forming the second layer of the antireflection layer was carried out by using $TiO_2$ as a target, electric power of 500 W, $Ar/O_2 = 39/1$ as a sputtering gas, a pressure of 0.3 Pa, and a high frequency power source of 13.56 MHz.
The evaluation results are summarized in Table 1.

Table 1

| | Example 1 | Example 2 | Example 3 | Example 4 | Example 5 | Comp. Example 1 | Comp. Example 2 |
|---|---|---|---|---|---|---|---|
| Plasma emission intensity | 25 | 27 | 30 | 25 | 20 | 35 | - |
| P2 (M2/O2) | 1.86 | 1.80 | 1.69 | 1.85 | 1.94 | 1.52 | 1.49 |
| P1 (M1/O1) | 2.06 | 1.91 | 1.85 | 2.00 | 2.16 | 1.62 | 1.66 |
| Adhesiveness | A | A | A-B | A | A | C | C |
| Cracks | A | A | A | A | C | A | A |

**Claims**

1. An antireflection film comprising a transparent substrate having formed thereon an antireflection layer, the antireflection layer comprising a first layer formed on the transparent substrate, a second layer formed on the first layer, and a third layer formed on the second layer, the first layer and the second layer comprising an oxide of at least one metal selected from the group consisting of titanium and zirconium and satisfying the following expression:

$$P1 > P2$$

wherein P1 = O1/M1, P2 = O2/M2, O1 represents a number of oxygen element constituting the first layer, M1 represents a number of a metallic element constituting the first layer, O2 represents a number of oxygen element constituting the second layer, and M2 represents a number of a metallic element constituting the second layer.

2. The antireflection film as claimed in claim 1, wherein P2 is from 1.65 to 1.95.

**3.** The antireflection film as claimed in claim 1, wherein the second layer is formed by a vapor phase method.

**4.** The antireflection film as claimed in claim 1, wherein the third layer comprises an oxide of silicon.

**5.** The antireflection film as claimed in claim 1, wherein the first layer comprises titanium oxide.

**6.** The antireflection film as claimed in claim 5, wherein the titanium oxide is derived from an alkoxide of titanium.

<table>
<tr><td align="center">**INTERNATIONAL SEARCH REPORT**</td><td>International application No.<br>PCT/JP2004/004939</td></tr>
</table>

**A.  CLASSIFICATION OF SUBJECT MATTER**
Int.Cl$^7$  B32B9/00, G02B1/11

According to International Patent Classification (IPC) or to both national classification and IPC

**B.  FIELDS SEARCHED**

Minimum documentation searched (classification system followed by classification symbols)
Int.Cl$^7$  B32B1/00-35/00, G02B1/10-1/12

Documentation searched other than minimum documentation to the extent that such documents are included in the fields searched

| | | | |
|---|---|---|---|
| Jitsuyo Shinan Koho | 1926–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| A | JP 2004-21184 A  (Teijin Dupont Film Kabushiki Kaisha),<br>22 January, 2004 (22.01.04),<br>All references<br>(Family: none) | 1-6 |
| A | JP 10-68802 A  (Tokai Rubber Industries, Ltd.),<br>10 March, 1998 (10.03.98),<br>All references<br>(Family: none) | 1-6 |
| A | JP 10-728 A  (Dainippon Printing Co., Ltd.),<br>06 January, 1998 (06.01.98),<br>All references<br>(Family: none) | 1-6 |

☒  Further documents are listed in the continuation of Box C.  ☐  See patent family annex.

| | | | |
|---|---|---|---|
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>06 July, 2004 (06.07.04) | Date of mailing of the international search report<br>27 July, 2004 (27.07.04) |
|---|---|
| Name and mailing address of the ISA/<br>Japanese Patent Office | Authorized officer |
| Facsimile No. | Telephone No. |

Form PCT/ISA/210 (second sheet) (January 2004)

| | INTERNATIONAL SEARCH REPORT | International application No. |
|---|---|---|
| | | PCT/JP2004/004939 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2000-503070 A  (BVBA VANDERSTRAETEN E), 14 March, 2000 (14.03.00), All references & WO 97/25450 A1          & WO 97/25451 A1 | 1-6 |
| A | JP 9-25350 A  (Dainippon Printing Co., Ltd.), 28 January, 1997 (28.01.97), All references (Family: none) | 1-6 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10000728 A
- JP 2003005069 A